# EUROPEAN PATENT SPECIFICATION

(11) **EP 2 787 261 B1**
(45) Date of publication and mention of the grant of the patent: **29.06.2016**
(21) Application number: 14163221.6
(22) Date of filing: 02.04.2014
(51) Int. Cl.: F16K 43/00, F16K 1/228

(54) **Valve integrated into a fluid distribution network, network and energy conversion installation comprising such a valve**
In einer Flüssigkeitsverteilungsnetz integriertes Ventil, Netz und Energieumwandlungsinstallation mit solch einem Ventil
Soupape intégrée dans un réseau de distribution de fluide, réseau et installation de conversion d'énergie comprenant une telle valve

(30) Priority: 05.04.2013 FR 1353074
(43) Date of publication of application: 08.10.2014
(73) Proprietor: ALSTOM Renewable Technologies, 38100 Grenoble (FR)
(72) Inventor: Mathieu, Alain, 38250 Saint Nizier du Moucherotte (FR)
(74) Representative: General Electric Technology GmbH

(56) References cited:
- WO-A1-02/40903
- AT-B- 388 979
- CH-A5- 637 455
- FR-A1- 2 573 170
- GB-A- 197 000
- JP-A- 2005 147 234

## Description

The present invention relates to a valve which is integrated, in the use configuration, into a fluid distribution network, in particular upstream of a hydraulic machine, and makes it possible, in a controlled manner, to interrupt or authorize the flow of a fluid in a pipe. A hydraulic machine is understood to be a turbine, a pump or a turbine-pump. Such a valve comprises a shut-off member which is rotated by a control device of the valve so as to alternately block or authorize the passage of the fluid.

The invention is applicable particularly in the field of valves of the butterfly type that are used upstream of a hydraulic machine.

It is known that a hydraulic installation may comprise a number of hydraulic machines that are all supplied in parallel by an upstream pipe. Thus, during maintenance operations on a valve, in order for example to replace the service seal of the valve, it is necessary to work on the valve in the dry state, that is to say without fluid inside. This has the drawback that it is necessary to stop the inlet of fluid, upstream of the valve, into the pipe, and thus to cease supplying the other hydraulic machines of the installation. This is particularly disadvantageous from an economical point of view, since the production or the distribution of the fluid is stopped during maintenance operations on the valves.

The same problem arises for valves that are used in other fluid distribution networks.

In order to solve this problem, it is known to use a maintenance sealing mechanism, the function of which is to seal the valve when a maintenance operation is carried out on the service seal. The maintenance sealing mechanism is thus positioned upstream of the service seal. The maintenance mechanism is, in this case, simply a seal having a profile in the form of a musical note, the round part of which is pressed radially against the shut-off member around the entire periphery of the latter by virtue of rods that are manipulated outside the valve. This mechanism is generally satisfactory. However, the seal is made of an elastomer material which does not make it as robust as a mechanism that uses metallic parts.

To this end, it is known to use a maintenance sealing mechanism composed of a metal ring that is able to move and has a conical internal surface which is complementary to the external surface of the shut-off member which it surrounds and which, in a controlled manner, is pressed against the latter in order to provide sealing during a maintenance operation. The use of a metal ring provides greater resistance to the pressure of the fluid inside the valve. Furthermore, a seal is disposed in a groove outside the valve and is compressed during contact between the ring and the shut-off member. This makes it possible to seal the assembly. However, if there is a desire to adapt this secondary sealing system to other valves, that is to say to valves having a different shut-off member, it is not certain that the external surface of the shut-off member will be complementary with the internal surface of the ring. Thus, the ring does not adapt correctly to all types of shut-off member.

The same principle has been adopted for valves that comprise two shut-off members. In this case, a mobile ring, bearing against the upstream shut-off member, compresses a seal made of elastomer. Although this device works, a valve having two shut-off members off member is in the open position, it nevertheless resists the passage of the fluid. This additional head loss results in a weaker jet power at the outlet of the pipe.

Furthermore, maintenance sealing mechanisms comprising a flexible tongue made of metal material, in particular steel, which is pressed against the shut-off member in order to provide sealing are known from US-A-4 898 363, US-A-3 834 663 and US-A-4 037 819. The drawback of these mechanisms is that it is difficult to adapt the geometry of the tongue to that of the shut-off member, this making them poorly adaptable to different types of valve. In addition, they are only applicable for valves having small dimensions, in particular for a diameter of between 200 and 300 mm. Specifically, it is to be feared that, for valves having a diameter of between 1 and 8 m, these flexible tongues made of steel do not provide sufficient resistance to the pressure of the upstream fluid.

Document JP 2005 147234 teaches a butterfly valve arranged on a pipe and comprising a tubular valve drum having, at a downstream side, a ring shaped seat portion. A valve shutter is arranged within the tubular drum and includes a body which bears, at the downstream side, a main plate and, at the upstream side, a secondary plate.

Document CH-A-637 455 discloses a butterfly valve arranged between a section of an upstream pipe and a section of a downstream pipe. This valve includes a valve body and a valve shutter disposed within the body. Two trunnions are attached to the valve shutter and continue as an operating shaft.

Document WO A 02/40903 discloses a valve assembly 10 having a body defining a fluid passageway centered on a central axis. A flapper is arranged within the passageway and is movable upon rotation of a shaft, between an opened position and a closed position.

Document GB 197 000 discloses a throttle valve having a casing that delimits a fluid passage. The throttle valve is arranged within a pipe and includes a disc which allows closing off the passage. The disc is recessed at one extremity so as to form an annular pocket. This annular pocket extends around the circumference of the disc and houses a seal ring. This seal ring is adapted to contact with the inner surface of the casing to close the passage.

Document AT 388 979 discloses a butterfly valve having a valve shutter arranged within a body. On the downstream side, the valve shutter is equipped on its periphery with a service sealing device. This device includes a service seal ring and a fixing ring.

Lastly, FR-A-2 573 170 discloses a butterfly valve, adapted to equip hydraulic ducts in a power plant. This valve comprises a body inside which is arranged a valve shutter.

It is these drawbacks which the invention intends more particularly to remedy by proposing a valve having a maintenance sealing mechanism that is easily adaptable and is resistant to high pressures.

To this end, the invention relates to a valve which is integrated into a fluid distribution network and makes it possible, in a selective manner, to interrupt or authorize the flow of a fluid in an axial direction of a pipe, this valve comprising an external body, inside which a shut-off member is disposed, a service seal which, in a shut-off position of the valve, provides sealing between the shut-off member and the body of the valve, and a maintenance sealing mechanism which is disposed upstream of the service seal and which provides sealing during maintenance operations on the service seal. This mechanism comprises a ring which is able to move axially, with respect to the body of the valve, between a retracted position, in which it does not prevent the passage of the fluid, and a forward position, where it bears in a sealing manner against the shut-off member.

In accordance with the invention, the ring carries, on its internal surface, an elastically deformable membrane which, when the ring is in the forward position, bears, at least partially, against the shut-off member.

By virtue of the invention, the sealing of the valve during maintenance operations is improved and the maintenance sealing mechanism resists a high pressure inside the valve and is adaptable to different valves.

According to advantageous but not obligatory aspects of the invention, a valve may incorporate one or more of the following features in any technically admissible combination:
- The ring comprises at least one bore that allows the fluid to flow from an internal volume of the valve to a volume located between the internal surface of the ring and the membrane.
- The maintenance sealing mechanism also comprises a plurality of screws that are able to move the ring in translation in the axial direction.
- The ring comprises at least one slot and the screws each comprise a head that is inserted into the slot.
- The ring comprises as many slots as screws and the slots are distributed regularly around the periphery of the ring, and an axial clearance of the screw in the slot is greater than 2 mm.
- The screws are inserted into threads in an annular frame fixed to the body of the valve and are movable axially by a maneuvering member, in particular by a wrench.
- Each screw is secured to a collar which delimits a pushing chamber, the pressurizing of this pushing chamber involving the forward movement of the screw, while each screw is secured to a piston which delimits a pulling chamber, the pressurizing of this pulling chamber involving the retraction of the screw.
- The valve also comprises a device for immobilizing the ring.
- The immobilizing device comprises at least one locking rod, one end of which is able to be inserted, radially to the axis of the pipe, between the annular frame and the ring, when the ring of the maintenance sealing mechanism is in the forward position.

The invention also relates to a fluid distribution network comprising at least one valve as described above, installed on a pipe.

The invention also relates to an installation for converting hydraulic energy into electrical or mechanical energy, or vice versa, comprising a fluid distribution network as mentioned above, wherein the pipe is a supply pipe of a hydraulic machine belonging to the installation.

Finally, the invention relates to a method for carrying out a maintenance operation on a service seal and/or on a downstream liner of a valve as described above, characterized in that it comprises at least the following steps of:
a) manipulating the maintenance sealing mechanism such that the ring passes into its forward position,
b) draining the fluid that remains trapped between the ring and the frame,
c) removing the service seal and/or the downstream liner,
d) repositioning or replacing the service seal and/or the downstream liner,
e) manipulating the maintenance sealing mechanism in order to cause the ring to pass into its retracted position.

The method may also comprise, for a valve which comprises a device for immobilizing the ring, a step, following step a) and preceding step b), that consists in manipulating the immobilizing device on the valve so as to insert the end of each locking rod radially between the ring and the annular frame.

The invention will be better understood and further advantages thereof will become more clearly apparent in the light of the following description of the two embodiments of a valve according to the principle of the invention, this description being given solely by way of example and with reference to the appended drawings, in which:
- Figure 1 is a schematic view of an installation for converting hydraulic energy into electrical or mechanical energy,
- Figure 2 is a front view of a valve according to the invention,

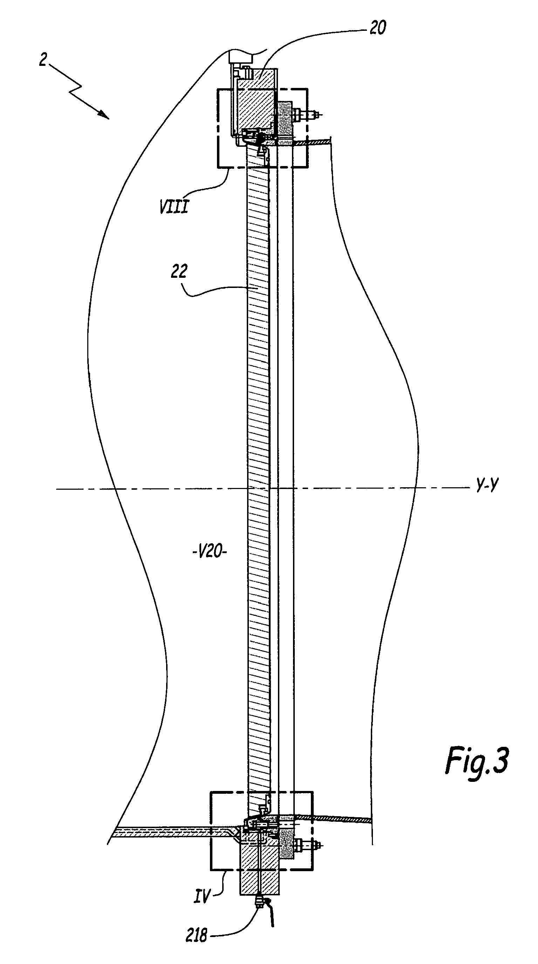

- Figure 3 is a section on the line III-III in Figure 2,
- Figure 4 is view on a larger scale of the box IV in Figure 3, which shows a maintenance sealing mechanism,
- Figure 5 is a section similar to Figure 4 in a configuration where the maintenance sealing mechanism is in the forward position,
- Figure 6 is a simplified partial view of a maintenance sealing mechanism belonging to a prior art valve in the use configuration,
- Figure 7 is a simplified partial view, comparable to Figure 6, of the maintenance sealing mechanism of a valve according to the invention in the use configuration,
- Figure 8 is a view on a larger scale of the box VIII in Figure 3,
- Figure 9 is a view similar to Figure 4 of a maintenance sealing mechanism belonging to a valve according to a second embodiment of the invention,
- Figure 10 is a view similar to Figure 8 for the maintenance sealing mechanism from Figure 9 when the latter is in a forward position,
- Figure 11 is a section through an immobilizing device of the maintenance sealing mechanism when the latter is deactivated,
- Figure 12 is a section through the immobilizing device of the maintenance sealing mechanism when the latter is activated.

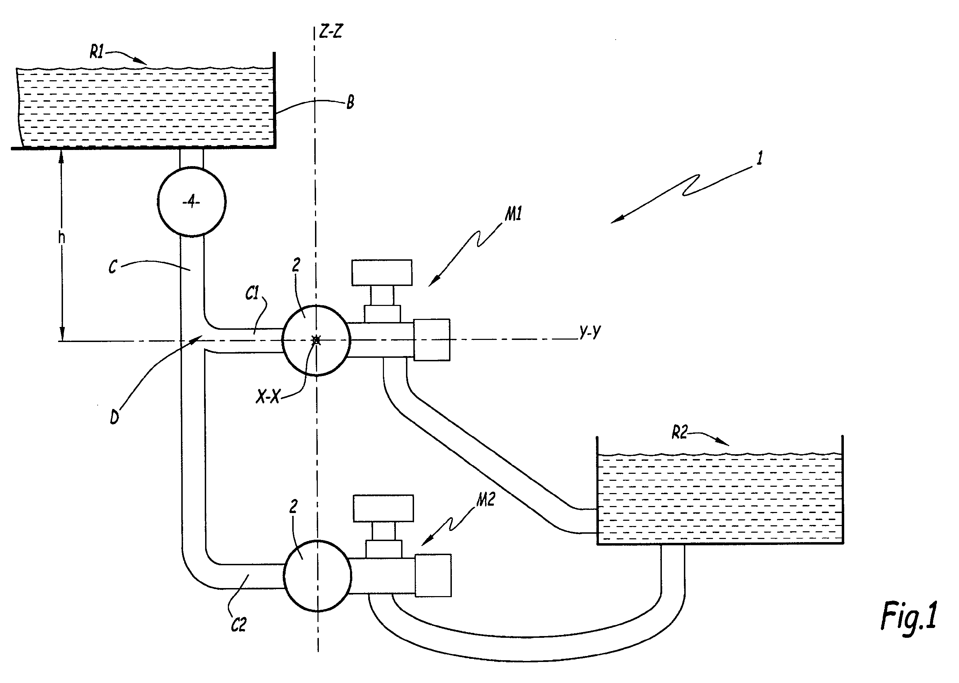

Figure 1 shows an example of an installation 1 for converting hydraulic energy into electrical energy according to the invention, this hydraulic installation 1 comprising a dam B, an upstream pond R1, a plurality of hydraulic machines M1 and M2 and a downstream pond R2. This type of hydraulic installation makes it possible, inter alia, to store electrical energy in a simple manner: it is conceivable for each hydraulic machine to function as a turbine during the day, that is to say to use hydraulic energy resulting from the difference in height h between the upstream pond R1 and the hydraulic machine M1 or M2 in order for example to rotate an alternator and thus to produce electricity, and to function as a pump at night, thus conveying the water contained in the downstream pond R2 to the upstream pond R1. To this end, the hydraulic installation also comprises a supply pipe C which is connected to the upstream pond R1 and which supplies all of the hydraulic machines, in parallel, by means of a bifurcation D located upstream of all the hydraulic machines. Two types of valves are thus commonly used. A first valve 4, known as the pipe head valve, stops or alternatively authorizes the flow in the pipe C. A second valve 2, called the guard valve, is located downstream of the bifurcation and upstream of each hydraulic machine. It stops or alternatively supplies the hydraulic machine respectively located downstream of this valve.

A supply line C1 of the hydraulic machine M1 and a supply line C2 of the hydraulic machine M2 are noted. The pipe C and the lines C1 and C2 together form a fluid distribution network.

The following description thus relates more particularly to a guard valve 2 for authorizing or stopping the supplying of the hydraulic machine M1. However, it is transposable to a pipe head valve 4 to which the invention also applies. All of this is likewise transposable to a fluid distribution network without a hydraulic machine.

The guard valve 2 is located in a line C1 which directly supplies the hydraulic machine M1 and through which water thus passes in a direction defined by an axis Y-Y. Furthermore defined are an axis Z-Z that is defined as the axis perpendicular to the axis Y-Y in the plane of Figure 1, the axis Z-Z being vertical, and an axis X-X perpendicular to the axes Y-Y and Z-Z and to the plane of Figure 1. The axes X-X, Y-Y and Z-Z intersect at the center of the valve 2.

In the rest of the description, the forward direction is defined as the upstream direction and the rearward direction is defined as the downstream direction.

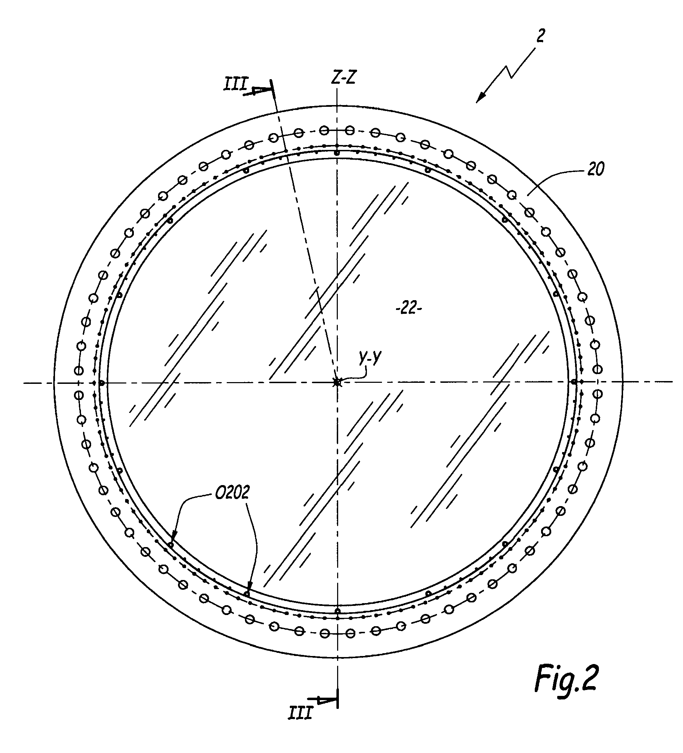

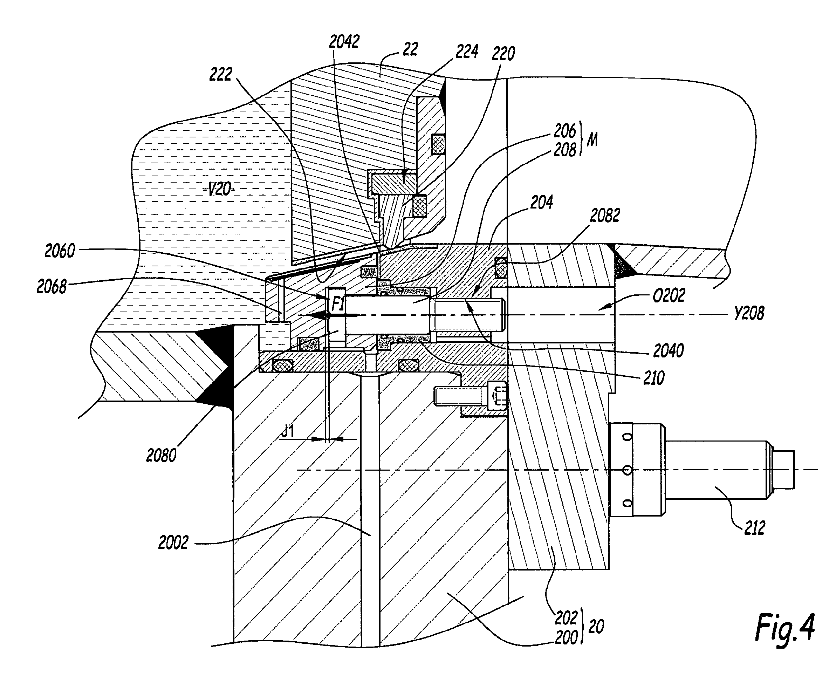

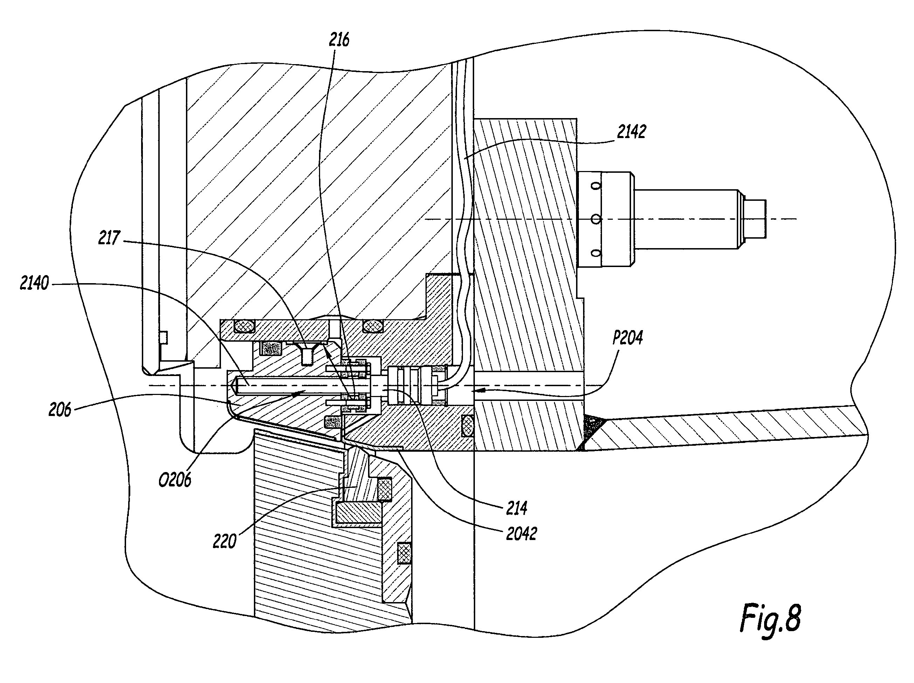

As can be seen in Figures 4 and 8, the valve 2 has a cylindrical overall shape, centered on the axis Y-Y, and comprises an external body 20, inside which a shut-off member 22 is positioned. The valve 2 is a butterfly-type valve. Thus, the shut-off member 22 is a disk and, in the configuration of Figure 2, the disk 22 is in the shut-off position of the valve 2.

As can be seen in Figure 4, the valve 2 comprises a service seal 220. This seal 220 is disposed in a groove 224 that extends around the entire periphery of the disk 22. The service seal 220 seals the valve 2 when the disk 22 is in the shut-off position and the valve is in service.

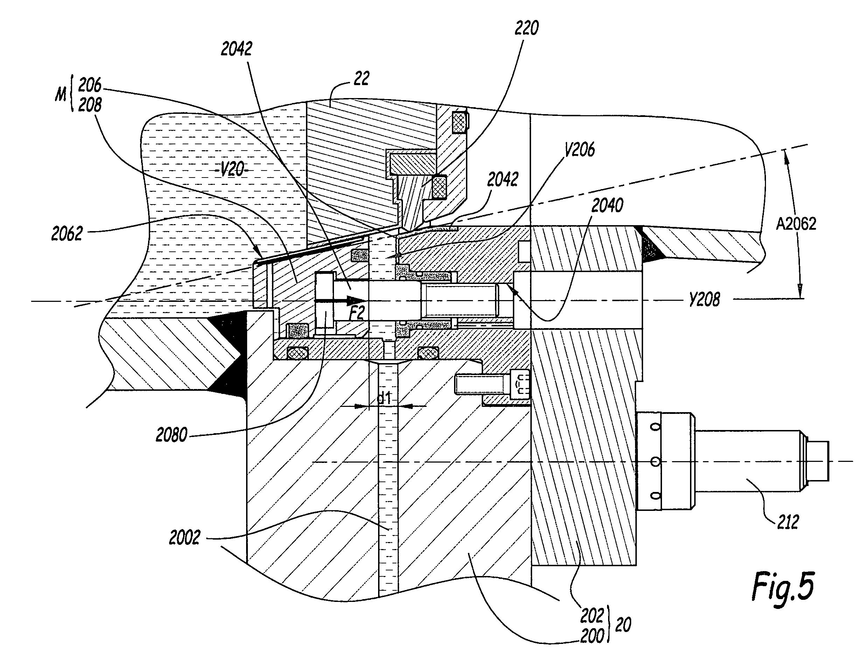

The valve 2 likewise comprises a maintenance sealing mechanism M which is disposed upstream of the service seal 220. The purpose of this maintenance sealing mechanism M is to seal the valve 2 when it is desired to carry out a maintenance operation on the service seal 220. The mechanism M is shown in the retracted position in Figure 4 and in the forward position in Figure 5. This maintenance sealing mechanism M is formed by a plurality of screws 208 and a ring 206. More specifically, the secondary mechanism comprises sixteen screws 208, which are distributed regularly around the central axis Y-Y and which each extend along an axis Y208 parallel to the axis Y-Y. These screws 208 are inserted into threads 2040 in an annular frame 204 fixed to the external body 20, in the vicinity of the shut-off member 22 when the latter is in the shut-off position of the valve. The annular frame 204 is disposed, radially with respect to the axis Y-Y, around the shut-off member 22 and carries a lining 2042 for supporting the seal 220 in this position. The screws 208 each have a threaded part 2082 that has a thread pitch complementary to that of the thread 2040. Disposed around each screw 208 and upstream of the thread 2040 into which the latter is inserted is a self-lubricating bush 210 for guiding the screw 208 in rotation and in translation. Each screw 208 bears, upstream, against the ring 206.

Specifically, each screw 208 comprises, in the region of its upstream end, a screw head 2080 having a diameter larger than that of the body of the screw. This screw head 2080 is inserted into a slot 2060 that extends radially in the ring 206. In practice, the ring 206 has sixteen slots 2060 which are distributed regularly around the axis Y-Y. The ring 206 is thus secured axially, that is to say along the axis Y208, to each screw 208. An axial clearance J1 is defined as the clearance of the screw head 2080 inside the slot 2060. This clearance is measured parallel to the axis Y208 and is greater than 2 mm.

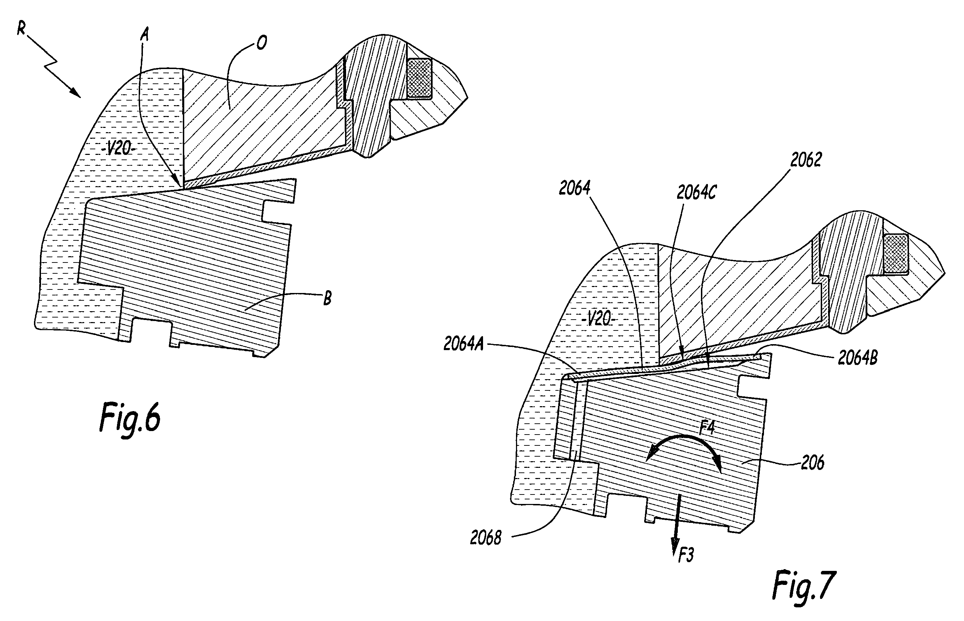

The clearance J1 between the ring 206 and the screws 208 is such that a deformation of the ring 206 has a limited effect on the screws 208 and, consequently, on the annular frame 204. Specifically, when the valve 2 is in service, the pressure of the fluid inside the valve tends to deform the ring 206. This deformation may be a radial extension or slight twisting about the axis Y-Y. These extension and twisting forces are respectively shown in Figure 7 by the arrows F3 and F4. In these two cases, the deformation of the ring 206 exerts a limited force on the screws 208, since the clearance between the screws 208 and the ring 206 authorizes a slight movement of the ring 206.

The ring 206 is made of a metallic material, in particular austenitic or martensitic stainless steel. Thus, this provides sufficient resistance to the pressure of the fluid inside the valve 2.

The external body 20 is formed by a downstream flange 200 and a downstream liner 202 that are fixed together by fixing members 212 which, in this example, are screws. The external body 20 has an internal volume V20 in which the fluid may flow. The downstream liner 202 has sixteen orifices 0202, each aligned with the threads 2040 in the angular frame 204. The number of screws 208, of slots 2060, of orifices 0202 and of threads 2040 is identical and is adapted depending on the size of the valve. In this way, it is it possible to insert a tool, such as a socket wrench, into the orifices 0202 in order to access the functional surfaces of the screws 208. To this end, each screw 208 comprises, in the region of its end opposite the screw head 208, a housing, the walls of which form the functional surfaces of the screw 208 since they are designed to engage with the socket wrench.

The ring 206 has an internal surface 2062 which is frustoconical and converges in the downstream direction with respect to the axis Y-Y and to the axis Y208 of each screw 208. An inclination angle A2062 of the surface 2062 with respect to an axis Y208 is defined. This angle A2062 is in practice between 5° and 20°, preferably close to 12°.

In the retracted position of the ring 206 shown in Figure 4, said ring is not subjected to forces associated with the pressure of the fluid, since there is a pressure equilibrium between the front and rear of the ring 206. The manipulation of the maintenance sealing mechanism M makes it possible to pass from the configuration in Figure 4 to the configuration in Figure 5. Although the sealing mechanism M has sixteen screws 208 that all act on the ring 206, only the action of one screw 208 on the ring 206 is described in detail below, since this is transposable to the other screws 208 of the mechanism M. For this purpose, it is appropriate to insert a tool (not shown in the figures) into each orifice 0202 of the downstream liner 202 in order to access the functional surfaces of the corresponding screw 208. A tightening torque can then be applied in order to move the screw forward along the axis Y208. The forward movement of the screw 208 is shown in Figure 4 by the arrow F1.

The screwing of the screw 208 entails, by engagement between the screw head 2080 and the slot 2060 in the ring 206, the axial movement of the ring 206 toward the front and parallel to the axis Y208.

Thus, at the end of its travel, the ring 206 comes into contact with an outer surface 222 of the shut-off member 22. The axial travel, that is to say parallel to the axis Y208, of the movement of the ring 206 in order to pass from the retracted position shown in Figure 4 to the forward position shown in Figure 5 is denoted d1. In practice, the travel d1 is between 10 and 20 mm depending on the size of the valve. It is precisely this coming into contact of the ring 206 with the shut-off member 22 which makes it possible to seal the valve 2 when the service seal 220 is demounted.

In this configuration, it is possible to remove the seal 220 and also the downstream liner 202 in order to repair or replace them.

When the ring 206 has arrived in the forward position, it is subjected to forces associated with the pressure of the upstream fluid since there is no longer a pressure equilibrium between the front and the rear of the ring 206. Specifically, in the retracted position of the ring 206, the fluid is distributed homogeneously around it. There is thus fluid present downstream of the ring which exerts a pressure in the upstream direction. This means that the ring 206 is not subjected to forces associated with the pressure of the fluid.

However, once the ring 206 is in the forward position and it is desired to return it to its retracted position, the fluid present inside a volume V206 disposed downstream of the ring 206 resists the retraction of the ring 206. For this reason, it is suitable, in parallel with the forward movement of the ring 206, to drain the fluid present inside the volume V206. This operation is carried out by means of channels 2002 hollowed out in the downstream flange 200 which communicate with the volume V206. To this end, manual valves 218 that can be maneuvered outside the valve are used.

The effectiveness of the maintenance sealing mechanism M resides on the quality of the contact brought about between the ring 206 and the outer surface 222 of the shut-off member 22. To this end, and as is illustrated best in Figure 7, the ring 206 carries a membrane 2064 which is welded, by its two edges 2064A and 2064B, to the upstream and downstream walls of the ring 206. Thus, the membrane 2064 extends, in a rectilinear manner, along the internal surface 2062 of the ring 206. The width and the shape of the membrane 2064 are adapted such that the membrane 2064 deforms in dependence on its interactions with the shut-off member 22.

An annular volume V2064 present between the internal surface 2062 of the ring 206 and the membrane 2064 is defined. This volume V2064 communicates, by way of a plurality of bores 2068 hollowed out at regular intervals in the ring 206, with the internal volume V20 of the valve. Thus, the fluid flowing inside the pipe arrives at the volume V2064 if the pipe has not been drained. There is thus a pressure equilibrium on either side of the membrane 2064. This pressure equilibrium makes it possible not only to limit the compression of the membrane 2064 against the ring 206 but also to increase the contact surface area between the ring 206 and the shut-off member 22.

Specifically, Figure 6 shows the contact made in a prior art valve R between a mobile ring B and a shut-off member O. It will be noted that the contact surface area A between the shut-off member O and the ring B is point-wise in the plane of Figure 6. By way of comparison between Figures 6 and 7, and with a contact surface area between the membrane 2064 and the shut-off member 22 being denoted 2064C, it will be noted that this has a much greater area than the contact surface area A previously obtained for prior art valves R.

Furthermore, the outer surface 222 of the shut-off member 22 is inclined in a complementary manner to the internal surface 2062 of the ring 206. This improves sealing, since this is the configuration in which the contact surface area 2064C is largest.

As can be seen in Figure 8, the maintenance sealing mechanism M comprises a plurality of sensors 214, of the magnetostrictive type, which are inserted into the bores P204 in the annular frame 204 and into housings 0206 in the ring 206, all around the axis Y-Y. In the following text, only one sensor 214 is described in detail, since the other sensors 214 function in an identical manner. The sensor 214 has a head 2140 inserted into the ring 206 and is connected, by means of a cable 2142, to a measuring unit (not shown). This sensor 214 makes it possible to measure the forward movement of the ring 206 and thus to know if the maintenance sealing mechanism M is activated or not.

Furthermore, the valve 2 is equipped with sectors 216 which are fixed in the ring 206 by the screws 217. These sectors 216 are self-lubricating sectors which guide the ring 206 in translation along the axis Y-Y with respect to the frame 204.

With the position of the maintenance sealing mechanism M being known, it is possible to prevent the shut-off member opening while the maintenance sealing mechanism M is in the forward position.

In the opposite direction, in order to retract the ring 206, it is appropriate to apply a tightening torque opposite to that exerted in order to move the screw 208 forward. In this way, the screw 208 is retracted and, consequently, the ring 206 is retracted since the latter is axially secured to the screw 208. This retraction is shown, in Figure 5, by an arrow F2.

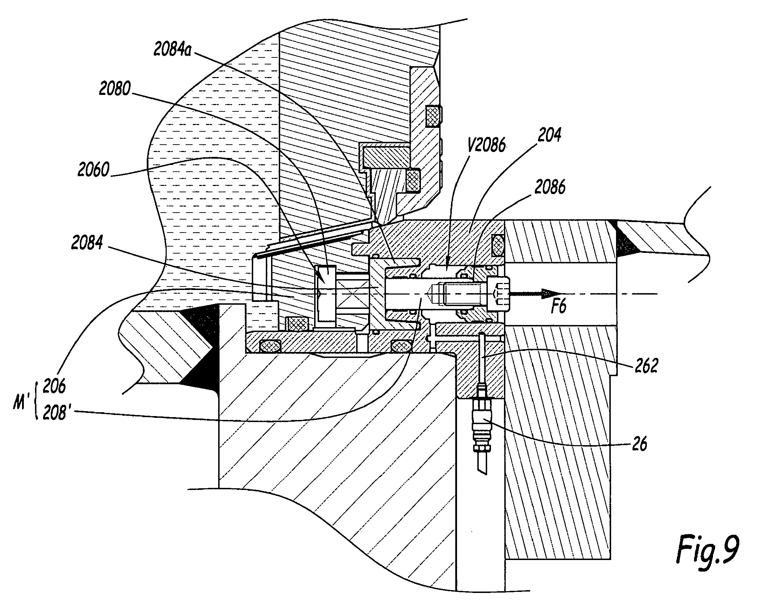

Figures 9 to 12 show a sealing mechanism M' according to a second embodiment of the invention. For the sake of clarity of the description, only the elements that are different from the first embodiment are described below. Elements having the same structure and having the same function retain their reference while the elements that are different from those in the first embodiment bear the same reference followed by a prime.

The maintenance sealing mechanism M' differs from that in the first embodiment in that the screws 208' are each secured axially to a collar 2084 which is disposed downstream of the screw head 2080. This collar 2084 is immobilized around each screw 208 and has extensions 2084a that are curved toward the rear. Each screw 208' is likewise secured axially, downstream, to a piston 2086. The way in which the mechanism M' functions is described in detail below only for a single screw 208', since it is transposable to all the other screws 208'.

The forward movement and retraction of the maintenance sealing mechanism M' is carried out by injection of oil. To this end, the maintenance sealing mechanism M' comprises a manual pump, which is not shown in the figures, which supplies circuits 242 and 262 that are respectively connected to the outlet of fittings 24 and 26 and in which the pressure of oil injected does not exceed 650 bar.

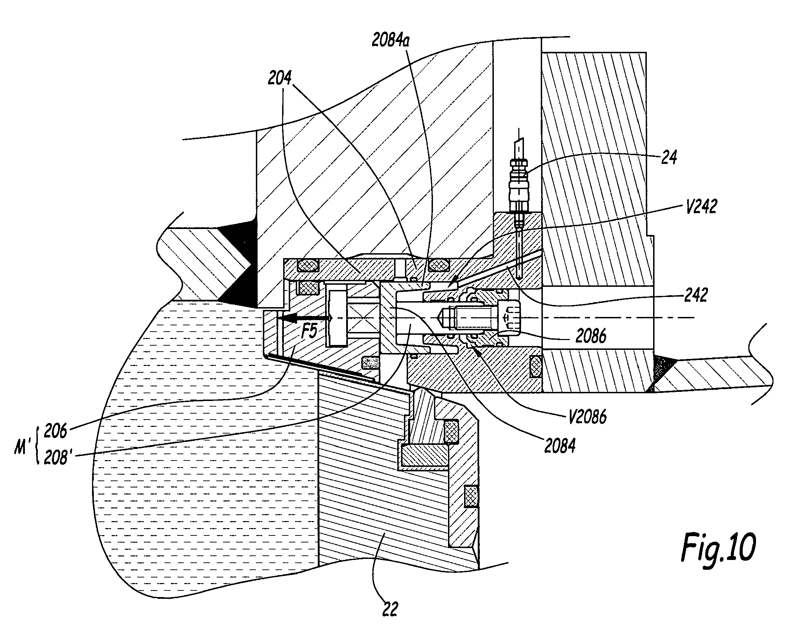

In order to move the maintenance sealing mechanism M' forward, that is to say in order to pass from the configuration in Figure 9 to that in Figure 10, it is appropriate to supply the fitting 24 with pressurized oil. The supply circuit 242 opens and leads into a pushing chamber V242 in contact with extensions 2084a of the collar 2084 of the screw 208'. The injection of oil into the channel 242 thus brings about a pushing force on the extensions 2084a, which causes the screw 208' to move forward. This movement is shown in Figure 10 by the arrow F5. In similar manner to the first embodiment, the screw 208' pushes the ring 206 forward into contact with the outer surface of the shut-off member 22.

In the opposite direction, when it is appropriate to deactivate the maintenance sealing mechanism M', the second fitting 26 is supplied with pressurized oil. The second fitting 26 supplies the circuit 262 which communicates with a pulling chamber V2086 disposed between the piston 2086 and the annular frame 204. The pressurizing of this pulling chamber V2086 entails a force that pushes the hydraulic cylinder 2086 toward the rear. Since the screw 208' is secured to the hydraulic cylinder 2086, it is likewise moved toward the rear and, by means of the slot 2060, drives the ring 206 toward the rear. This direction is shown in Figure 9 by the arrow F6. In parallel, it is necessary to depressurize the pushing chamber V242 in order to optimize the retraction.

In comparison with the first embodiment, it is noted that this maintenance sealing mechanism M' is controlled in a semi-automatic manner, since there is no longer a need to manipulate a wrench in order to move the screws 208' forward. The forward movement or retraction of the maintenance sealing mechanism M' is controlled from outside the valve by an operator who acts directly on the manual pump. Thus, depending on which movement of the maintenance sealing mechanism M' is desired, the operator actuates the corresponding oil fitting.

If the semi-automatic system malfunctions, it is possible to return to a manual system by removing the piston 2086 from the screw 208. This operation is possible since said piston is accessible through the orifices 0202 in the downstream liner 202. Once the piston 2086 has been removed, the screw 208' can be manipulated as desired.

In a similar manner to the first embodiment, the ring 206 carries, on its internal surface 2062, the membrane 2064 which, during the forward movement of the ring 206, bears against the outer surface 222 of the shut-off member 22.

However, during a maintenance operation on the service seal, it is necessary to ensure security by locking the system in the forward position in case of a head loss in the pushing chamber V242. The valve 2' thus has a device 226 for immobilizing the mechanism M' once the ring 206 has been moved forward. Specifically, the pressure forces inside the valve 2' are high and tend to push the ring 206 toward the rear. Thus, if the pressure of oil injected into the pushing chamber is not sufficient to compensate these forces (example: leak or rupture of fittings or of a hose), the ring 206 then risks moving toward the rear. In order to avoid this untimely movement of the ring 206, the immobilizing device 226 is actuated when the ring 206 has arrived in its forward position.

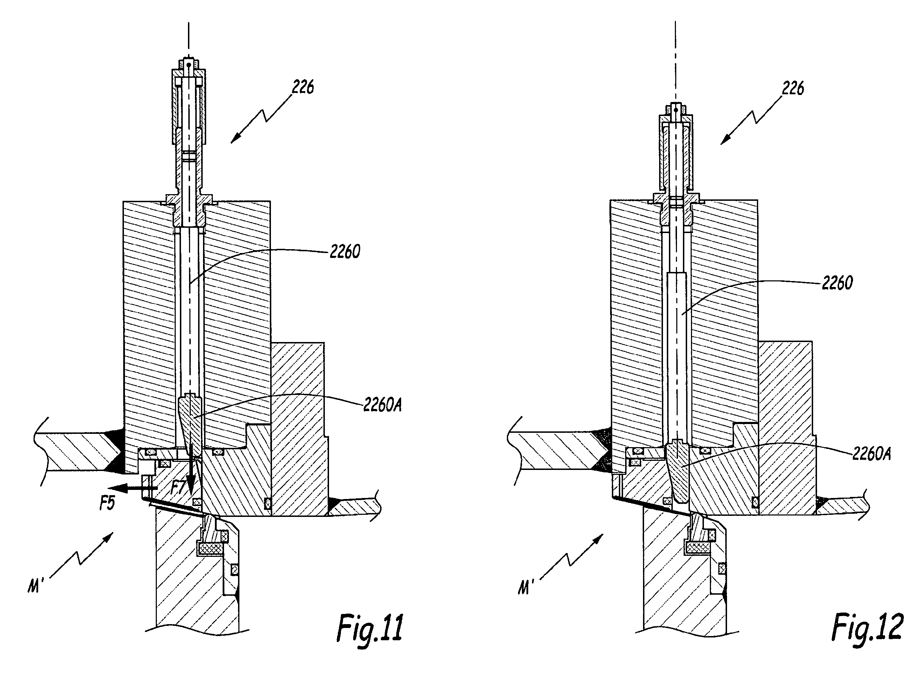

More specifically, and as can be seen in Figures 11 and 12, the immobilizing device 226 comprises sixteen rods 2260 which are distributed regularly around the axis Y-Y and are inserted radially with respect to the axis Y-Y into orifices provided in the body of the valve 20. The number of rods 226 and the number of screws 208' is adapted depending on the diameter of the valve and the pressure of the fluid. However, the size of the screws 208 and 208' remains the same since the mechanisms must remain compact. When the maintenance sealing mechanism has arrived in its forward position, the operator inserts all the rods 2260 successively into the interior of the volume V206 formed between the ring 206 and the annular frame 204. This movement is shown, in Figure 11, by an arrow F7. The width of the end 2260A of the rods 2260 is designed for interposition between the ring 206 and the annular frame 204. Once the rods 2260 have been inserted, they are held in position by means of a non-reversible screw/nut system.

The ring 204 is thus kept pressed forward and there is no risk of it retracting.

When it is desired to retract the ring 206, it is appropriate to remove all the ends 2060A of the rods 2260 from the volume V206. This movement is shown in Figure 12 by an arrow F8. The immobilizing device 226 thus no longer prevents the retraction of the ring 206.

In a variant which is not shown, the membrane 2064 is curvilinear and extends over the upstream wall of the ring 206.

In a variant which is not shown, it is possible to use, instead of the sensors 214, another type of ring 206 movement sensor, in particular a sensor of the inductive type, which measures the movement of the screw 208.

In a variant which is not shown, the surface 222 of the shut-off member 22 is not complementary with the surface 2062 of the ring 206.

In a variant, the fixing members 212 are studs.

In a variant which is not shown, the ring 206 comprises a slot 2060 which extends around the entire periphery of the ring.

The variants and embodiments mentioned above may be combined in order to provide new embodiments of the invention.

## Claims

1. Valve (2; 2') which is integrated into a fluid distribution network and makes it possible, in a selective manner, to interrupt or authorize the flow of a fluid in an axial direction (Y-Y) of a pipe, this valve comprising:
- an external body (20), inside which a shut-off member (22) is disposed,
- a service seal (220) which, in a shut-off position of the valve, provides sealing between the shut-off member and the body (20) of the valve, and
- a maintenance sealing mechanism (M; M') which is disposed upstream of the service seal (220) and which provides sealing during maintenance operations on the service seal (220), this mechanism (M; M') comprising a ring (206) which is able to move axially, with respect to the body (20) of the valve, between a retracted position, in which it does not prevent the passage of the fluid, and a forward position, where it bears in a sealing manner against the shut-off member (22),
wherein the ring carries, on its internal surface (2062), an elastically deformable membrane (2064) which, when the ring is in the forward position, bears, at least partially, against the shut-off member (22), ***characterized in that*** said membrane (2064) is welded, by its two edges (2064A, 2064B) to upstream and downstream walls of said ring (206) such that said membrane (2064) extends, in a rectilinear manner, along the internal surface (2062) of said ring (206).

2. Valve (2; 2') according to Claim 1, **characterized in that** the ring (206) comprises at least one bore (2068) that allows the fluid to flow from an internal volume (V20) of the valve to a volume (V2064) located between the internal surface (2062) of the ring and the membrane (2064).

3. Valve (2; 2') according to either of the preceding claims, **characterized in that** the maintenance sealing mechanism (M; M') also comprises a plurality of screws (208; 208') that are able to move the ring (206) in translation in the axial direction (Y-Y).

4. Valve (2; 2') according to Claim 3, **characterized in that** the ring (206) comprises at least one slot (2060), and **in that** the screws (208) each comprise a head (2080) that is inserted into the slot (2060).

5. Valve (2; 2') according to Claim 4, **characterized in that** the ring (206) comprises as many slots (2060) as screws (208), and **in that** the slots are distributed regularly around the entire periphery of the ring (206), and **in that** an axial clearance (J1) of the screw (208; 208') in the slot (2060) is greater than 2 mm.

6. Valve (2) according to one of Claims 3 to 5, **characterized in that** the screws (208) are inserted into threads (2040) in an annular frame (204) fixed to the body (20) of the valve and are movable axially (Y208) by a maneuvering member, in particular by a wrench.

7. Valve (2') according to one of Claims 1 to 5, **characterized in that** each screw (208') is secured to a collar (2084) which delimits a pushing chamber (V242), the pressurizing of this pushing chamber involving the forward movement of the screw, and **in that** each screw is secured to a piston (2086) which delimits a pulling chamber (V2086), the pressurizing of this pulling chamber (V2086) involving the retraction of the screw.

8. Valve (2') according to Claim 7, **characterized in that** the valve (2') also comprises a device (266) for immobilizing the ring (206).

9. Valve (2') according to Claim 8, **characterized in that** the immobilizing device (226) comprises at least one locking rod (2660), one end (2260A) of which is able to be inserted, radially to the axis (Y-Y) of the pipe, between the annular frame (204) and the ring (206), when the ring (206) of the maintenance sealing mechanism (M') is in the forward position.

10. Fluid distribution network (C, C1, C2), **characterized in that** it comprises at least one valve according to one of the preceding claims, installed on a pipe.

11. Installation (1) for converting hydraulic energy into electrical or mechanical energy, or vice versa, **characterized in that** it comprises a fluid distribution network (C, C1, C2) according to Claim 10, wherein the pipe is a supply pipe (C1) of a hydraulic machine (M1) belonging to the installation.

12. Method for carrying out a maintenance operation on a service seal (220) and/or on a downstream liner (202) of a valve (2; 2') according to one of Claims 6 to 9, **characterized in that** it comprises at least the following steps of:
a) manipulating the maintenance sealing mechanism (M; M') such that the ring (206) passes into its forward position,
b) draining the fluid that remains trapped between the ring (206) and the frame (204),
c) removing the service seal (220) and/or the downstream liner (202),
d) repositioning or replacing the service seal and/or the downstream liner (202),
e) manipulating the maintenance sealing mechanism (M; M') in order to cause the ring (206) to pass into its retracted position.

13. Method according to Claim 12, used for a valve according to Claim 9, **characterized in that** it also comprises a step, following step a) and preceding step b), that consists in manipulating the immobilizing device (226) on the valve (2') so as to insert the end (2260A) of each locking rod (2260) radially between the ring (206) and the annular frame (204).

## Patentansprüche

1. In einem Fluidverteilungsnetz integriertes Ventil (2; 2'), das ermöglicht, den Fluidstrom in einer Axialrichtung (Y-Y) eines Rohrs selektiv zu unterbrechen oder zu gestatten, wobei dieses Ventil Folgendes umfasst:
- einen äußeren Körper (20), in dem ein Absperrglied (22) angeordnet ist,
- eine Betriebsdichtung (220), die in einer Absperrstellung des Ventils eine Abdichtung zwischen dem Absperrglied und dem Körper (20) des Ventils bereitstellt, und
- einen Wartungsdichtungsmechanismus (M; M'), der stromaufwärts der Betriebsdichtung (220) angeordnet ist und der eine Abdichtung bei Wartungsarbeiten an der Betriebsdichtung (220) bereitstellt, wobei dieser Mechanismus (M; M') einen Ring (206) umfasst, der sich bezüglich des Körpers (20) des Ventils zwischen einer zurückgezogenen Stellung, in der er das Passieren des Fluids nicht verhindert, und einer vorderen Stellung, in der er abdichtend an dem Absperrglied (22) anliegt, axial bewegen kann,
wobei der Ring auf seiner Innenfläche (2062) eine elastisch verformbare Membran (2064) trägt, die, wenn sich der Ring in der vorderen Stellung befindet, zumindest teilweise am Absperrglied (22) anliegt, **dadurch gekennzeichnet, dass** die Membran (2064) durch seine beiden Ränder (2064A, 2064B) mit einer stromaufwärtigen und stromabwärtigen Wand des Rings (206) so verschweißt ist, dass sich die Membran (2064) entlang der Innenfläche (2062) des Rings (206) geradlinig erstreckt.

2. Ventil (2; 2') nach Anspruch 1, **dadurch gekennzeichnet, dass** der Ring (206) mindestens eine Bohrung (2068) umfasst, die einen Fluidstrom von einem Innenvolumen (V20) des Ventils zu einem Volumen (V2064) gestattet, das zwischen der Innenfläche (2062) des Rings und der Membran (2064) positioniert ist.

3. Ventil (2; 2') nach einem der vorhergehenden Ansprüche, **dadurch gekennzeichnet, dass** der Wartungsdichtungsmechanismus (M; M') weiterhin mehrere Schrauben (208; 208') umfasst, die den Ring (206) translatorisch in der Axialrichtung (Y-Y) bewegen können.

4. Ventil (2; 2') nach Anspruch 3, **dadurch gekennzeichnet, dass** der Ring (206) mindestens einen Schlitz (2060) umfasst und dass die Schrauben (208) jeweils einen Kopf (2080) umfassen, der in dem Schlitz (2060) eingeführt ist.

5. Ventil (2; 2') nach Anspruch 4, **dadurch gekennzeichnet, dass** der Ring (206) so viele Schlitze (2060) wie Schrauben (208) umfasst und dass die Schlitze gleichmäßig um den gesamten Umfang des Rings (206) herum verteilt sind und dass ein axiales Spiel (J1) der Schraube (208; 208') in dem Schlitz (2060) größer als 2 mm ist.

6. Ventil (2) nach einem der Ansprüche 3 bis 5, **dadurch gekennzeichnet, dass** die Schrauben (208) in Gewinde (2040) in einem ringförmigen Rahmen (204), der an dem Körper (20) des Ventils befestigt ist, eingeführt sind und sich durch ein Betätigungsglied, insbesondere durch einen Schraubenschlüssel, axial bewegen können (Y208).

7. Ventil (2') nach einem der Ansprüche 1 bis 5, **dadurch gekennzeichnet, dass** jede Schraube (208') an einem Bund (2084) angebracht ist, der eine Schubkammer (V242) begrenzt, wobei die Druckbeaufschlagung dieser Schubkammer die Vorwärtsbewegung der Schraube impliziert, und dass jede Schraube an einem Kolben (2086) angebracht ist, der eine zugkammer (V2086) begrenzt, wobei die Druckbeaufschlagung dieser zugkammer (V2086) das Zurückziehen der Schraube impliziert.

8. Ventil (2') nach Anspruch 7, **dadurch gekennzeichnet, dass** das Ventil (2') weiterhin eine Vorrichtung (266) zum Blockieren des Rings (206) umfasst.

9. Ventil (2') nach Anspruch 8, **dadurch gekennzeichnet, dass** die Blockiervorrichtung (226) mindestens eine Verriegelungsstange (2660) umfasst, von der ein Ende (2260A) radial zur Achse (Y-Y) des Rohrs zwischen dem ringförmigen Rahmen (204) und dem Ring (206) eingeführt werden kann, wenn sich der Ring (206) des Wartungsdichtungsmechanismus (M') in der vorderen Stellung befindet.

10. Fluidverteilungsnetz (C, C1, C2), **dadurch gekennzeichnet, dass** es mindestens ein an einem Rohr installiertes Ventil nach einem der vorhergehenden Ansprüche umfasst.

11. Anlage (1) zur Umwandlung von hydraulischer Energie in elektrische oder mechanische Energie oder umgekehrt, **dadurch gekennzeichnet, dass** sie ein Fluidverteilungsnetz (C, C1, C2) nach Anspruch 10 umfasst, wobei das Rohr ein Versorgungsrohr (C1) einer zur Anlage gehörenden hydraulischen Maschine (M1) ist.

12. Verfahren zur Durchführung von Wartungsarbeiten an einer Betriebsdichtung (220) und/oder an einer stromabwärtigen Auskleidung (202) eines Ventils (2; 2') nach einem der Ansprüche 6 bis 9, **dadurch gekennzeichnet, dass** es mindestens die folgenden Schritte umfasst:
a) Betätigen eines Wartungsdichtungsmechanismus (M; M') derart, dass der Ring (206) in seine vordere Stellung gelangt,
b) Ablassen des Fluids, das zwischen dem Ring (206) und dem Rahmen (204) eingeschlossen bleibt,
c) Entfernen der Betriebsdichtung (220) und/oder der stromabwärtigen Auskleidung (202),
d) Wiederplatzieren oder Austauschen der Betriebsdichtung und/oder der stromabwärtigen Auskleidung (202),
e) Betätigen des Wartungsdichtungsmechanismus (M; M') zum Bewirken, dass der Ring (206) in seine zurückgezogene Stellung gelangt.

13. Verfahren nach Anspruch 12, das für ein Ventil nach Anspruch 9 verwendet wird, **dadurch gekennzeichnet, dass** es weiterhin einen Schritt in Anschluss an Schritt a) und vor Schritt b) umfasst, der darin besteht, die Blockiervorrichtung (226) an dem Ventil (2') zu betätigen, um das Ende (2260A) jeder Verriegelungsstange (2260) radial zwischen den Ring (206) und den ringförmigen Rahmen (204) einzuführen.

## Revendications

1. Robinet (2 ; 2') intégré dans un réseau de distribution de fluide et permettant, de manière sélective d'interrompre ou d'autoriser la circulation d'un fluide selon une direction axiale (Y-Y) d'une conduite, ce robinet comprenant :
- un corps externe (20), à l'intérieur duquel est disposé un obturateur (22),
- un joint d'étanchéité de service (220) qui, en position d'obturation du robinet, assure l'étanchéité entre l'obturateur et le corps (20) du robinet et
- un mécanisme d'étanchéité de maintenance (M ; M'), disposé en amont du joint d'étanchéité de service (220) et qui assure l'étanchéité lors des opérations de maintenance sur le joint d'étanchéité de service (220), ce mécanisme (M ; M') comprenant une bague (206) qui est mobile axialement, par rapport au corps (20) du robinet, entre une position reculée où elle ne s'oppose pas au passage du fluide et une position avancée où elle est en appui de manière étanche contre l'obturateur (22),
dans lequel la bague porte, sur sa surface interne (2062), une membrane (2064) élastiquement déformable qui, lorsque la bague est en position avancée, est, au moins en partie, en appui contre l'obturateur(22), **caractérisé en ce que** ladite membrane (2064) est soudée, par ses deux bords (2064A, 2064B), sur les parois amont en aval de ladite bague (206) de telle sorte que ladite membrane (2064) s'étend, de manière rectiligne, le long de la surface interne (2062) de ladite bague (206).

2. Robinet (2 ; 2') selon la revendication 1, **caractérisé en ce que** la bague (206) comprend au moins un perçage (2068) permettant au fluide de circuler à partir d'un volume interne (V20) du robinet jusqu'à un volume (V2064) situé entre la surface interne (2062) de la bague et la membrane (2064).

3. Robinet (2 ; 2') selon l'une des revendications précédentes, **caractérisé en ce que** le mécanisme d'étanchéité de maintenance (M ; M') comprend en outre plusieurs vis (208 ; 208') aptes à entrainer la bague (206) en translation selon la direction axiale (Y-Y).

4. Robinet (2 ; 2') selon la revendication 3, **caractérisé en ce que** la bague (206) comprend au moins une rainure (2060) et **en ce que** les vis (208) comprennent chacune une tête (2080) insérée dans la rainure (2060).

5. Robinet (2 ; 2') selon la revendication 4, **caractérisé en ce que** la bague (206) comprend autant de rainures (2060) que de vis (208) et **en ce que** les rainures sont équiréparties sur toute la périphérie de la bague (206) et **en ce qu'**un jeu axial (J1) de la vis (208 ; 208') dans la rainure (2060) est supérieur à 2 mm.

6. Robinet (2) selon l'une des revendications 3 à 5, **caractérisé en ce que** les vis (208) sont insérées dans des taraudages (2040) d'un bâti annulaire (204) fixé au corps (20) du robinet et sont déplaçables axialement (Y208) par un organe de manoeuvre, notamment par une clé.

7. Robinet (2') selon l'une des revendications 1 à 5, **caractérisé en ce que** chaque vis (208') est solidaire d'une couronne (2084) qui délimite une chambre de poussée (V242), la mise en pression de cette chambre de poussée impliquant l'avancée de la vis, et **en ce que** chaque vis est solidaire d'un piston (2086) qui délimite une chambre de tirage (V2086), la mise en pression de cette chambre de tirage (V2086) impliquant le recul de la vis.

8. Robinet (2') selon la revendication 7, **caractérisé en ce que** le robinet (2') comprend en outre un dispositif (266) de blocage de la bague (206).

9. Robinet (2') selon la revendication 8, **caractérisé en ce que** le dispositif de blocage (226) comprend au moins une tige (2660) de verrouillage dont une extrémité (2260A) est apte à être insérée, radialement à l'axe (Y-Y) de la conduite, entre le bâti annulaire (204) et la bague (206), lorsque la bague (206) du mécanisme d'étanchéité de maintenance (M') est en position avancée.

10. Réseau de distribution de fluide (C, C1, C2), **caractérisé en ce qu'**il comprend au moins un robinet selon l'une des revendications précédentes installé sur une conduite.

11. Installation (1) de conversion d'énergie hydraulique en énergie électrique ou mécanique, ou réciproquement, **caractérisée en ce qu'**elle comprend un réseau de distribution de fluide (C, C1, C2) selon la revendication 10 dans lequel la conduite est une conduite d'alimentation (C1) d'une machine hydraulique (M1) appartenant à l'installation.

12. Méthode pour effectuer une opération de maintenance sur un joint d'étanchéité de service (220) et/ou sur une manchette aval (202) d'un robinet (2 ; 2') conforme à l'une des revendications 6 à 9 **caractérisée en ce qu'**elle comprend au moins des étapes consistant à :
a) manipuler le mécanisme d'étanchéité de maintenance (M ; M') afin que la bague (206) passe dans sa position avancée,
b) drainer le fluide resté coincé entre la bague (206) et le bâti (204),
c) retirer le joint d'étanchéité de service (220) et/ou la manchette aval (202),
d) repositionner ou remplacer le joint d'étanchéité de service et/ou la manchette aval (202),
e) manipuler le mécanisme d'étanchéité de maintenance (M ; M') pour faire passer la bague (206) dans sa position reculée.

13. Méthode selon la revendication 12 utilisée pour un robinet selon la revendication 9, **caractérisée en ce qu'**elle comprend en outre une étape postérieure à l'étape a) et antérieure à l'étape b) consistant à manipuler le dispositif de blocage (226) sur le robinet (2') pour enfoncer l'extrémité (2260A) de chaque tige (2260) de verrouillage, radialement entre la bague (206) et le bâti annulaire (204).
